# EUROPEAN PATENT SPECIFICATION

(11) **EP 3 284 620 B1**
(45) Date of publication and mention of the grant of the patent: **16.12.2020**
(21) Application number: 15888749.7
(22) Date of filing: 24.07.2015
(51) Int. Cl.: B60S 13/00

(54) **VEHICLE TRACTION DEVICE AND VEHICLE TRACTION METHOD**
FAHRZEUGANTRIEBSVORRICHTUNG UND FAHRZEUGANTRIEBSVERFAHREN
DISPOSITIF DE TRACTION DE VÉHICULE ET PROCÉDÉ DE TRACTION DE VÉHICULE

(30) Priority: 15.04.2015 CN 201510176908
(43) Date of publication of application: 21.02.2018
(73) Proprietor: Nuctech Company Limited, TongFang Building, Shuangqinglu, Haidian District Beijing 100084 (CN)
(72) Inventor: WANG, Qiangqiang, Beijing 100084 (CN); SUN, Shangmin, Beijing 100084 (CN); LIANG, Jinning, Beijing 100084 (CN); LIANG, Zhizhong, Beijing 100084 (CN); HE, Yuan, Beijing 100084 (CN); YU, Weifeng, Beijing 100084 (CN); TANG, Sheng, Beijing 100084 (CN); FU, Bing, Beijing 100084 (CN); TAN, Haitian, Beijing 100084 (CN)
(74) Representative: Held, Stephan
(86) International application number: PCT/CN2015/000530
(87) International publication number: WO 2016/165044

(56) References cited:
- CN-A- 101 195 378
- CN-A- 102 530 791
- CN-A- 104 742 671
- CN-U- 204 801 439
- FR-A2- 2 593 748
- JP-A- 2012 020 815
- US-A- 4 682 922
- US-A- 4 682 922
- US-A- 4 696 484
- US-A1- 2008 159 840

## Description

### FIELD OF THE INVENTION

The present invention relates to a vehicle towing device and a vehicle towing method, in particular to a vehicle towing device having a rotating yoke and the towing method thereof.

### BACKGROUND OF THE INVENTION

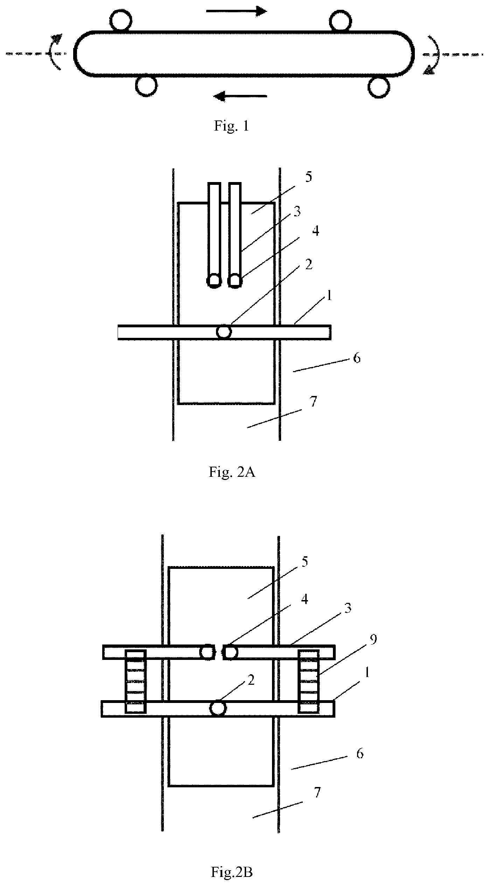

The vehicle towing device has many uses, for example, a towing device is needed in the fields of car washing, car repairing and security checking to fix the front wheels and/or rear wheels of the towed vehicle so as to drive the towed vehicle to move through a path. Usually the push member of a towing device may be in a form of a push roller, a chain, a plate link chain, etc. Such kind of towing device and push member need to rotate cyclically toward one direction so as to push the towed vehicle, for example the towing device using a push roller as the push member as shown in Fig. 1, so such kind of towing device is set to a one-way circulation mode that is similar to a closed-loop conveyor belt, so that the back stroke of the push member has to return to the start point of towing through an underground portion (the portion under the dashed lines in Fig. 1 represents the underground portion). In this case, a lot of constructions need to be made to form a large underground space, which results in a high cost for manufacturing and actual use, meanwhile, lacks flexibility and efficiency in disassembling and assembling of the towing device.
US 2008/159840 A1 discloses a trailer system for a radiation imaging inspection system and a method for inspecting a vehicle by radiation imaging of a vehicle through the trailer system. This document discloses the preamble of independent claim 1. JP 2012 020815 A discloses a cable-traction type vehicle conveyor that allows a vehicle to be subjected to an X-ray inspection by movable carriages.
US 4 682 922 A discloses A device adapted to accommodate at least one wheel of a vehicle for use and installation in car-carriers.
CN 102 530 791 A discloses a vehicle wheel identifying device, which comprises a pair of bodies, a controller, a pair of front fork arms, a pair of rear fork arms, a vehicle front wheel positioning detecting module and a vehicle front wheel clamping detecting module.

### SUMMARY OF THE INVENTION

The present invention, as defined by the appended independent claims, is proposed to solve the above-mentioned problem, and it aims at providing a vehicle towing device and a vehicle towing method, which can reduce the amount of construction work and increase the efficiency of vehicle towing, and enable more flexible installation and operation.

To achieve the above-mentioned objects, the present invention provides a vehicle towing device having a front yoke, a rear yoke, a front yoke shaft, a rear yoke shaft, a towing mechanism, a control unit, a drive unit and a towing path, the front yoke and the rear yoke are respectively connected to the front yoke shaft and rear yoke shaft, and can rotate horizontally around the front yoke shaft and the rear yoke shaft under the control of the control unit, respectively, the front yoke shaft and the rear yoke shaft are connected to the towing mechanism in tandem, the drive unit drives the towing mechanism to run in the towing path, and the axial directions of both the front yoke shaft and the rear yoke shaft are perpendicular to a surface of the towing mechanism.

In addition, in the vehicle towing device of the present invention, the towing mechanism is a tractor, there are two front yoke shafts which are distributed on the tractor in a bilaterally symmetrical manner, there are two rear yoke shafts which are distributed on the tractor in a bilaterally symmetrical manner, the front yokes are two bilaterally symmetrical yokes mounted on said two front yoke shafts, respectively, the rear yokes are two bilaterally symmetrical yokes mounted on said two rear yoke shafts, respectively.

Furthermore, in the vehicle towing device of the present invention, a bottom of the towing path is lower than the ground nearby, and a lower surface of the front yoke and the rear yoke is slightly higher than the ground nearby, a width of the towing path is less than a distance between the two front wheels of the towed vehicle.

In addition, in the vehicle towing device of the present invention, there is also a track arranged on both sides of the towing path, and the towing mechanism is disposed on two parallel rails of said track.

In addition, in the vehicle towing device of the present invention, there is also a track arranged on both sides of the towing path, and the towing mechanism is disposed on two parallel rails of said track.

In addition, in the vehicle towing device of the present invention, there are two towing mechanisms which are symmetrically disposed on the two parallel rails of the track, each of said two towing mechanisms is connected to one front yoke shaft and one rear yoke shaft, the two front yoke shafts are arranged symmetrically about a central axis of the towing path, and the two rear yoke shafts are arranged symmetrically about a central axis of the towing path, each of said two front yoke shafts is connected to one front yoke, and each of said two rear yoke shafts is connected to one rear yoke, and the two front yokes are arranged symmetrically and the two rear yokes are arranged symmetrically.

In addition, in the vehicle towing device of the present invention, the two rails of the track are arranged at both inner sides of the towing path, respectively.

In addition, in the vehicle towing device of the present invention, there is also a portal frame with the two ends thereof respectively connected to the two towing mechanisms on both sides of the towing path.

In addition, in the vehicle towing device of the present invention, a slope is formed at a side of the front yoke and the rear yoke close to the front wheels of the vehicle, so that the front yoke and the rear yoke, when being held against the front wheels of the vehicle, have the maximum contact surface with the front wheels of the vehicle.

In addition, in the vehicle towing device of the present invention, there are a front sensor and a rear sensor respectively disposed on the front yoke and the rear yoke, the front sensor and the rear sensor are respectively used for identifying contact of the front yoke and the rear yoke with the front wheels of the vehicle.

In addition, the present invention provides a vehicle towing method for the vehicle towing device as described above, characterized in that said method comprises the following steps:
keeping the front yoke in an open state so that the front yoke is substantially perpendicular to the direction of the towing path, and keeping the rear yoke in a closed state so that the rear yoke is substantially parallel to the direction of the towing path;
driving the vehicle into a preset area by a driver and stopping the vehicle;
making the front yoke and the rear yoke of the vehicle towing device to clamp the front wheels of the vehicle;
lifting the front wheels of the vehicle by the front yoke and the rear yoke so that the front wheels of the vehicle leave the ground;
towing the vehicle through the towing path by the towing mechanism of the vehicle towing device via said front yoke shaft, said rear yoke shaft, said front yoke and said rear yoke;
laying down the front wheels of the vehicle after the towing mechanism has towed the front wheels of the vehicle through the preset area;
respectively rotating the front yoke and the rear yoke horizontally about their respective front yoke shaft and rear yoke shaft until they are parallel to the direction of the towing path, then moving the towing mechanism along the towing path in an opposite direction of towing the vehicle to advance to a start point in the preset area so as to tow next vehicle.

In addition, in the vehicle towing method of the present invention, the step of driving the vehicle into a preset area by a driver and stopping the vehicle is specifically carried out in the following manner: providing a shallow V-pit or a mechanism that can move to form a V-pit at a designated location where the vehicle needs to stop in the towing path, and driving the vehicle into the V-pit by the driver to finish stopping the vehicle at the designated location.

In addition, in the vehicle towing method of the present invention,the step of driving the vehicle into a preset area by a driver and stopping the vehicle is specifically carried out in the following manner: setting a block area, moving the towing mechanism to the vehicle from a position far away from said vehicle, and finding the wheels by means of a sensor on the yoke to finish stopping the vehicle at a designated location.

In addition, the present invention provides a vehicle towing method for the vehicle towing device as described above, characterized in that said method comprises the following steps:
keeping the rear yoke in a closed state so that the rear yoke is substantially parallel to the direction of the towing path,
driving the vehicle into a preset area by a driver;
keeping the front yoke in an open state so that the front yoke is substantially perpendicular to the direction of the towing path;
stopping the vehicle after the two front wheels of the vehicle have been put against the front yoke of the vehicle towing device;
making the rear yoke of the vehicle towing device to rotate horizontally around the rear yoke shaft so that it is held against the front wheels of the vehicle;
lifting the front wheels of the vehicle by the front yoke and the rear yoke so that the front wheels of the vehicle leave the ground;
towing the vehicle through the towing path by the towing mechanism of the vehicle towing device via said front yoke shaft, said rear yoke shaft, said front yoke and said rear yoke;
laying down the front wheels of the vehicle after the towing mechanism has towed the front wheels of the vehicle through the preset area;
respectively rotating the front yoke and the rear yoke horizontally about their respective front yoke shaft and rear yoke shaft until they are parallel to the direction of the towing path, then moving them along the towing path in an opposite direction of towing the vehicle to advance to a start point in the

According to the invention of the present application, it is unnecessary to make a lot of constructions to form a large underground space, so there will not be high cost for manufacturing and actual use, moreover, flexible disassembling and assembling can be realized, so it is helpful for increasing work efficiency.

### BRIEF DESCRIPTION OF THE ACCOMPANYING DRAWINGS

Fig. 1 is a schematic drawing of a towing device in the prior art, which uses a push roller as the push member.
Fig. 2A and Fig. 2B are schematic drawings of the vehicle towing device in embodiment 1 of the present invention.
Fig. 3A, Fig. 3B and Fig. 3C are schematic drawings of the vehicle towing device of a variation of embodiment 1 of the present invention.
Fig. 4A, Fig. 4B and Fig. 4C are front views corresponding to Fig. 3A, Fig. 3B and Fig. 3C.
Fig. 5A, Fig. 5B and Fig. 5C are schematic drawings of the vehicle towing device in embodiment 2 of the present invention.
Fig. 6A, Fig. 6B and Fig. 6C are schematic drawings of the vehicle towing device in embodiment 3 of the present invention. The claimed invention is based on this embodiment of the invention.
Fig. 7 is a schematic drawing of a fixed security check system that uses the vehicle towing device of the present invention.
Fig. 8 is a schematic drawing of sectional power-off of the fixed security check system that uses the vehicle towing device of the present invention.

### DETAILED DESCRIPTION OF THE PREFERRED EMBODIMENTS

The present invention will be described in detail below with reference to the drawings.

### Embodiment 1

Fig. 2A and Fig. 2B are schematic drawings of the vehicle towing device in embodiment 1 of the present invention. A pit-type vehicle towing device is shown in Fig. 2A and Fig. 2B. As shown in Fig. 2A and Fig. 2B, the vehicle towing device of embodiment 1 has a front yoke 1, a rear yoke 3, a front yoke shaft 2, a rear yoke shaft 4, a towing mechanism 5, a control unit, a drive unit and a towing path 7. Specifically, the front yoke 1 and the rear yoke 3 are respectively connected to the front yoke shaft 2 and the rear yoke shaft 4, and the front yoke 1 and the rear yoke 3 can rotate horizontally around the front yoke shaft 2 and the rear yoke shaft 4 under the control of the control unit (not shown in the figures). In addition, Fig. 2A shows a waiting state, in which the rear yoke 3 is substantially parallel to a sidewall of the towing path 7 (i.e. the rear yoke 3 is arranged in a vertical direction in Fig. 2A). Moreover, in Fig. 2A, the front yoke 1 is perpendicular to a sidewall of the towing path 7, but of course, the front yoke 1 may also be substantially parallel to the sidewall of the towing path 7 in the waiting state. That is to say, in the waiting state, the front yoke 1 and the rear yoke 3 may be either both parallel to the sidewall of the towing path 7, or both perpendicular to the sidewall of the towing path 7, or it is also all right if one of them is parallel to the sidewall of the towing path 7 and the other is perpendicular to the sidewall of the towing path 7. Furthermore, Fig. 2B shows a working state in which both the rear yoke 3 and the front yoke 1 are perpendicular to the sidewall of the towing path 7, and front wheels 9 of the towed vehicle are placed between the front yoke 1 and the rear yoke 3. In addition, as shown in Figs. 2A and 2B, the front yoke shaft 2 and the rear yoke shaft 4 are respectively connected to the towing mechanism 5 in tandem. Moreover, as shown in the figures, the axial directions (directions perpendicular to the paper in the figures) of both the front yoke shaft 2 and the rear yoke shaft 4 are perpendicular to a surface of the towing mechanism 5, the drive unit drives the towing mechanism 5 so that the towing mechanism 5 runs in the towing path 7. In addition, the towing path 7 can be a pit lower than the ground 6 nearby (wherein the towing mechanism 5 is below the ground), or it may be parallel to the ground 6 nearby (wherein the towing mechanism 5 is above the ground).

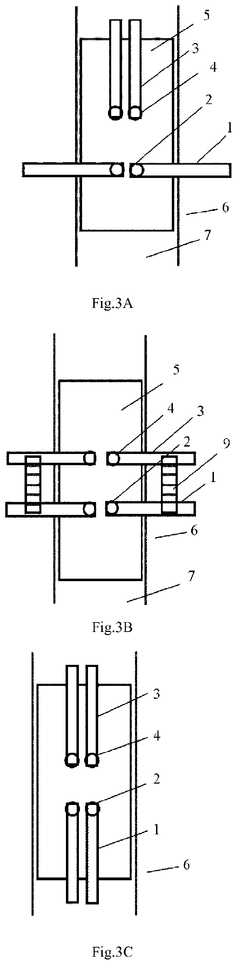

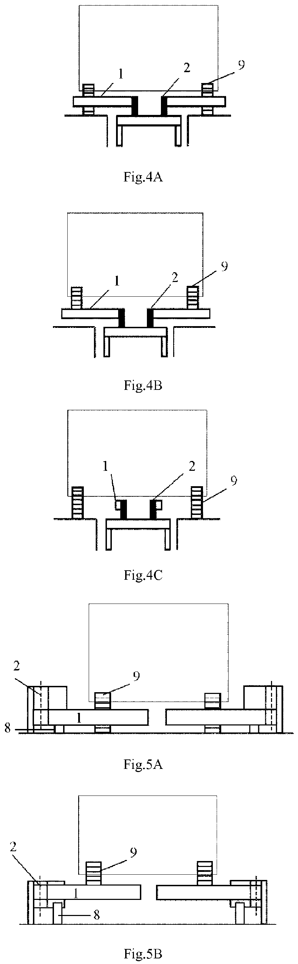

In addition, the towing mechanism 5 can be, but is not limited to, a tractor, in fact it can be any device that can realize the above-mentioned function. Moreover, Figs. 2A and 2B show a case where there are one front yoke shaft 2 and two rear yoke shafts 4, but the structure is not limited to this, any structure that can realize rotation of the front yoke and the rear yoke will do, for example, it may be a structure having one front yoke shaft and one rear yoke shaft. In addition, it may also be such a structure in which there are two front yoke shafts 2 which are distributed on the tractor 5 in a bilaterally symmetrical manner, and there are two rear yoke shafts 4 which are distributed on the tractor 5 in a bilaterally symmetrical manner, correspondingly, the front yokes 1 are two bilaterally symmetrical yokes mounted on said two front yoke shafts 2, respectively, the rear yokes 3 are two bilaterally symmetrical yokes mounted on said two rear yoke shafts 4, respectively, and twice of a length of the yoke is greater than a distance between two front wheels of the towed vehicle. The whole process of towing the vehicle is shown in Fig. 3A-3C and Figs. 4A-4C. A driver drives the vehicle to the position of the front yoke 1 as shown in Fig. 3A (in the case that the front yoke is perpendicular to the sidewall of the towing path 7, the vehicle arrives at a pre-identified position, e.g. a yellow line drawn in advance) and stops the vehicle when contacting the front yoke 1 (alternatively, other ways may be adopted, for example, providing a shallow V-pit or a mechanism that can move to form a V-pit at a designated location to stop the vehicle in the path, when the vehicle to be checked is driven into the V-pit, stopping of the vehicle in the designated location can be finished, or an area (which may be large) may be set, and the tractor moves towards the vehicle to be checked from a position far away from the vehicle to be checked and a sensor on the yoke is used to find the wheels), then the driver gets off the vehicle, and the rear yoke 3 is driven by the rear yoke shaft 4 to rotate to clamp the front wheels 9 of the vehicle, as shown in Fig. 3B; the front yoke 1 and the rear yoke 3 clasp and lift the front wheels 9 of the vehicle, and tow the vehicle to advance through the towing path 7, as shown in Fig. 4B; then the front yoke 1 and the rear yoke 3 lay down the front wheels 9 of the vehicle, and respectively rotate around the front yoke shaft 2 and the rear yoke shaft 4 until they are parallel to the sidewall of the towing path 7, as shown in Figs. 3C and 4C, and finally, they move backward to the start point of the towing path 7 to tow the newly entered vehicle, thereby finishing the whole process of towing vehicle. Furthermore, in this embodiment, the bottom of the towing path 7 is lower than the ground nearby, the width of the towing path 7 is less than the distance between the two front wheels of the towed vehicle, and the lower surfaces of the above-mentioned yokes are slightly higher than the ground nearby. However, it is not limited to this case, the bottom of the towing path 7 may be as high as the ground nearby, and the above-mentioned yokes may be slightly higher than the surface of the towing path 7.

### Embodiment 2

Embodiment 1 describes the case where there is one towing mechanism 1. In this embodiment, the case where there are two towing mechanisms will be described. In addition, this embodiment focuses on structures different from those in embodiment 1, while the same structures will not be repeatedly described herein.

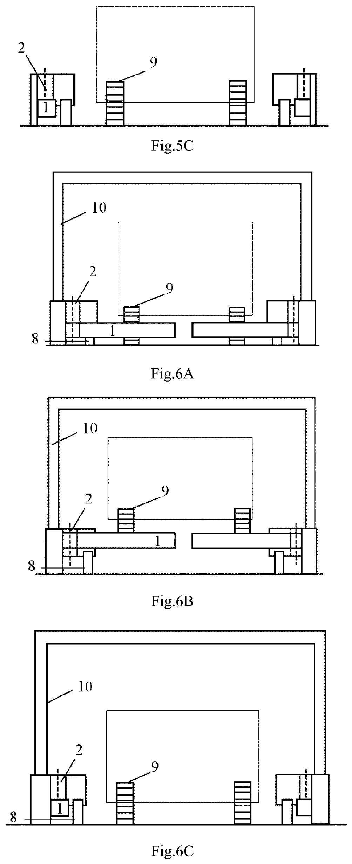

Figs. 5A, Fig. 5B and Fig. 5C are schematic drawings of the vehicle towing device in embodiment 2 of the present invention. That is, Figs. 5A, Fig. 5B and Fig. 5C show a track-type vehicle towing device. As shown in the figures, in this embodiment, the vehicle towing device further comprises a track arranged on both sides of the towing path, and there are two towing mechanisms, which are symmetrically arranged on said track, and each towing mechanism is connected to a front yoke shaft and a rear yoke shaft, and the two front yoke shafts are arranged symmetrically about a central axis of the towing path, likewise, the two rear yoke shafts are arranged symmetrically about the central axis of the towing path. In addition, like the structure shown in embodiment 1, each yoke shaft is connected to a yoke, and the left front yoke and the right front yoke are arranged symmetrically, the left rear yoke and the right rear yoke are arranged symmetrically. Except for the above-described structure, the rest structures are the same as the structures in embodiment 1.

Operation of the vehicle towing device in this embodiment will be described below. As shown in Figs. 5A, 5B and 5C, the towing mechanism is arranged in the towing path, wheels 8 of the towing mechanism are driven to move on the track (not shown in the figures) by a drive unit. The process of towing the vehicle in this embodiment is as follows: the driver drives the vehicle to a position near the front yoke 1 and stops the vehicle, and the driver gets off; the front yoke 1 contacts the front wheels 9 of the vehicle; the rear yoke (not shown) rotates about the rear yoke shaft until it is parallel to the front yoke 1, and it clamps the front wheels of the vehicle together with the front yoke 1, as shown in Fig. 5A; the front yoke and the rear yoke clasp and lift the front wheels of the vehicle, as shown in Fig. 5B, and tow the vehicle along the towing path through the preset area; then they lay down the front wheels of the vehicle; afterwards, the front yoke 1 and the rear yoke (which overlaps the front yoke 1 in Figs. 5A-5C) rotate around the front yoke shaft 2 and the rear yoke shaft (which overlaps the front yoke shaft in Figs. 5A-5C), respectively, until they are parallel to the direction of the towing path (i.e. parallel to the sidewall of the towing path), as shown in Fig. 5C; finally, the towing mechanism together with the front yoke 1, the front yoke shaft 2, the rear yoke and the rear yoke shaft move back to the start point of the towing path 7 to tow a newly entered vehicle, thereby finishing the whole process of towing vehicle. The track-type vehicle towing device in this embodiment has such an advantage as that it does not need any construction work at all, but only a track and a towing mechanism need to be mounted on the existing flat ground.

### Embodiment 3

A structure of another kind of vehicle towing device is provided in this embodiment. Figs. 6A, 6B and 6C are schematic drawings of the vehicle towing device in embodiment 3 of the present invention, namely, Figs. 6A, 6B and 6C show a portal-frame type vehicle towing device. In addition, this embodiment focuses on structures different from those in embodiments 1 and 2, while the same structures will not be repeatedly described herein.

As shown in Figs. 6A, 6B and 6C, the vehicle towing device in this embodiment further comprises a portal frame 10, whose two ends are connected to two towing mechanisms at both sides of the towing path, respectively. Specifically, in this embodiment, the portal-frame type vehicle towing device is formed by adding a portal frame on the basis of the track type towing device described in embodiment 2, as shown in Figs. 6A, 6B and 6C. The two ends of the portal frame 10 are mounted on two towing mechanisms at both sides of the towing path, respectively, and the towing processing thereof is similar to that of the track type device. In addition, since the portal frame is a rigid structure, the two towing mechanisms at both sides of the towing path can be driven synchronously by the portal frame, thereby avoiding displacement of the vehicle or jamming or sticking of the wheels of the towing mechanism caused by unsynchronous speeds of the towing mechanisms at both sides. Furthermore, in some cases, owing to the limitation of the height of the mounting site or the requirement of the client, the portal frame cannot be mounted, namely, only the above-described track-type towing mechanism can be mounted. In this case, a sensor can be used in combination with a PLC circuit to jointly control the two towing mechanisms so as to synchronize their speeds and positions in real time.

The vehicle towing device of the present invention is described by means of the above embodiments 1-3, but the present invention is not limited to cases defined in the above embodiments, various changes and combinations can be made. For example, with respect to the front yoke and rear yoke, a slope can be formed at a side of the front yoke and the rear yoke close to the front wheels of the vehicle, so that the front yoke and the rear yoke, when being held against the front wheels of the vehicle, have the maximum contact surface with the front wheels of the vehicle. In addition, for example, there may be a front sensor provided on the front yoke and a rear sensor provided on the rear yoke, the front sensor and rear sensor being used for identifying contact of the front yoke and the rear yoke with the front wheels of the vehicle, respectively. Specifically, when the front yoke and rear yoke clasp the front wheels of the vehicle, the rear sensor provided on the rear yoke senses whether the front wheels of the vehicle are within a space contacting the rear yoke through photoelectric or pressure sensing etc., for example, the transmission end of the photoelectric sensor can be arranged to be close to the rear yoke shaft, so that the emitted laser is parallel to the rear yoke, when the front wheels of the vehicle press on the rear yoke, the vehicle blocks the laser, so that the sensor senses the successful clasping of the wheels, otherwise, it is indicated that the wheels are missed. The photoelectric sensor may be of a receiving type (with a receiving end) or a scattering type (depending on diffusively scattering). The pressure sensor senses whether the wheels have been successfully clasped through the pressure put on the rear yoke by the front wheels of the vehicle. Although the above descriptions are about the rear yoke, they are also applicable to the front yoke. In the case where the rear sensor on the rear yoke senses a successful clasping of wheels while the front sensor senses an unsuccessful clasping of wheels, it means that the front wheels of the vehicle are lifted and departed from the front yoke, but are still in contact with the rear yoke temporarily. Either in this case or in the case of wheel missing, a control device is needed to instruct the vehicle towing device to stop the vehicle so as to prevent accidents. Moreover, the vehicle towing device of the present invention also has a characteristic of high towing power, and the maximum weight of the towed object can be 70 tons, which is impossible for a common towing device.

In addition, the vehicle towing device of the present invention can be applied to a fixed vehicle security check system. That is, the fixed vehicle security check system comprises: a ray source for emitting X-rays; a detector for receiving the X-rays emitted from the ray source and passing through the checked vehicle; and a vehicle towing device of the present invention. In such a fixed vehicle security check system, the ray source and the detector are mounted on both sides of the towing path of the vehicle towing device, and a direction of the X-rays emitted by the ray source is substantially perpendicular to the direction of the towing path of the vehicle towing device.

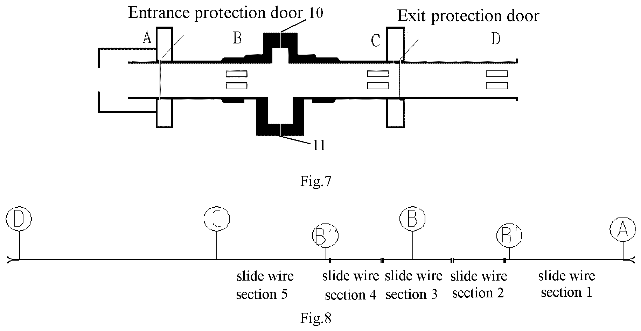

In addition, a fixed vehicle security check system having the following structure may be adopted, i.e. the fixed vehicle security check system comprises: a ray source for emitting X-rays; a detector for receiving the X-rays emitted from the ray source and passing through the checked vehicle; and vehicle towing devices of the present invention. However, there are at least two vehicle towing devices herein, which are arranged in tandem, and the towing paths thereof have the same direction and are co-axial, the ray source and the detector are mounted on both sides of the towing paths, and a direction of the X-rays emitted by the ray source is substantially perpendicular to the directions of the towing paths. To be specific, Fig. 7 shows a schematic drawing of such a fixed vehicle security check system. As shown in Fig. 7, there are four areas A, B, C and D, wherein the first vehicle towing device is provided in areas A and B, and the second vehicle towing device is provided in areas C and D. An entrance protection door is provided in areas A and B, and an exit protection door is provided in areas C and D. Wherein, the fixed vehicle security check system is between the entrance protection door and the exit protection door, a ray source 10 and a detector 11 of said fixed vehicle security check system are arranged on both sides of the towing path and enable the X-rays emitted from the ray source to be substantially perpendicular to the towing path as shown in Fig. 7, and preferably they are arranged on both sides of the towing path of the second vehicle towing device. The entrance protection door and the exit protection door are for shielding X-rays from entering into the external space. A checked vehicle is towed by the first vehicle towing device to enter the entrance protection door from area A, then the entrance protection door is closed, and the checked vehicle is towed by the first vehicle towing device to area B, then the first towing device finishes its task, so the front yoke 1 and rear yoke 3 thereof are adjusted to a state of being substantially parallel to the towing path and move to area A along the towing path (a state as shown in Figs. 3C, 4C, 5C and 6C), and at this time the second vehicle towing device moves to the vicinity of the front wheels of the vehicle in area B, and the front yoke and rear yoke of the second vehicle towing device rotate around their respective yoke shaft from a direction parallel to the towing path to become substantially perpendicular to the towing path, then they clasp and lift the front wheels of the vehicle to tow the front wheels of the vehicle to pass through area C. During this towing process, the ray source and the detector are turned on to scan the vehicle to finish the security check, then the ray source and the detector are turned off and then the exit protection door is opened, the second vehicle towing device tows the vehicle to area D and lastly the exit protection door is closed, and the second vehicle towing device puts down the checked vehicle, rotates the front yoke and rear yoke to a state of being substantially parallel to the towing path, and moves to area C again to tow a new vehicle. In the process where the second vehicle towing device tows the preceding vehicle to pass through security check, the first vehicle towing device may tow next vehicle into area A or area B so as to increase security check efficiency.

In addition, preferably a repairing station for the vehicle towing devices is provided on a front and/or back extended path of the towing path. If one vehicle towing device has a fault, it may be moved to the repairing station along the extended path of the towing path so as to be repaired in real time, while the other vehicle towing device continues to work, so the operation of the vehicle security check system will not be influenced. In this way, the vehicle towing device does not have to be disassembled and moved away by a crane, so it is convenient and efficient and will not influence normal use of the vehicle security check system.

Furthermore, the vehicle security check system may have the following structure, i.e. the vehicle security check system comprises: a ray source for emitting X-rays; a detector for receiving the X-rays emitted from the ray source and passing through the checked vehicle; and vehicle towing devices of the present invention. However, there are at least two vehicle towing devices herein, which are arranged in tandem, and the towing paths thereof have the same direction and are co-axial, the ray source and the detector are mounted on both sides of the towing path, and a direction of the X-rays emitted by the ray source is substantially perpendicular to the direction of the towing path. In addition, the vehicle security check system further comprises a slide wire for supplying power in the towing path, said slide wire is arranged as a sectioned slide wire to power the vehicle towing device in a sectionalized manner.

In addition, preferably, the slide wire is arranged as at least four slide wire sections sequentially arranged in the towing path, and the vehicle security check system further comprises a first position sensor disposed between a first slide wire section and a second slide wire section as well as a second position sensor disposed between a third slide wire section and a fourth slide wire section.

In addition, preferably, said vehicle security check system further comprises a fifth slide wire section arranged between the second slide wire section and the third slide wire section. Specifically, in the case that there are two vehicle towing devices arranged in tandem, there will be a period of time during which the first vehicle towing device and the second vehicle towing device move towards each other, so the two towing devices may collide due to control or other reasons. In order to avoid such accident, the position sensor can be used to sense the vehicle towing device and to cut the power of a certain slide wire section in the towing path that can be powered off separately, thereby preventing accidents. As shown in Fig. 8, the double vertical lines indicate the section division, namely, the slide wire sections 1-5 in the figure are five slide wire sections, wherein slide wire section 2 (i.e. the second slide wire section) and slide wire section 4 (i.e. the third slide wire section) are not powered simultaneously, while slide wire sections 1, 3 and 5 can be powered all the time. The letters in circles represent corresponding area points, the first vehicle towing device stops at point A to wait, the second vehicle towing device stops at point C to wait, and the scanning process is as follows: a first container truck (i.e. a checked vehicle) is driven to point A and is loaded onto the first vehicle towing device, then the first vehicle towing device delivers the first container truck to point B and put it down, then the first vehicle towing device returns to point A to wait, when the first vehicle towing device arrives at point A, the second vehicle towing device moves from point C to point B to get the truck, and after loading the first containing truck, it moves to point C, and during this movement, the ray source emits beams for scanning, when the scanning finishes, the second vehicle towing devices tows the first container truck to point C and then to point D to unload the first container truck. When the first vehicle towing device is delivering the second container truck from point A to point B, the second vehicle towing device is returning from point D to point C to wait, so the two devices moves towards each other at this time, and in order to prevent that the two vehicle towing devices do not stop at the positioning points for some reasons from happening, when the first vehicle towing device passes between points B and B', i.e. when the first sensor provided at point B' senses the first vehicle towing device, slide wire section 4 (the third slide wire section) is powered off; when the second vehicle towing device is between points B and B", i.e. when the second sensor provided at point B" senses the second vehicle towing device, slide wire section 2 (the second slide wire section) is powered off, thus even if both vehicle towing devices fail to stop between B' and B", the vehicle towing device that enters said area later will stop moving because of losing power, thereby ensuring safe operation of the system. Moreover, the fifth slide wire section may be powered all the time during the security check, preferably, it is continuously powered using the same power supply as the first slide wire section and the third slide wire section without being powered off, as shown by slide wire section 3 in Fig. 8.

## Claims

1. A vehicle towing device comprising a front yoke (1), a rear yoke (3), a front yoke shaft (2), a rear yoke shaft (4), a towing mechanism (5), a control unit, a drive unit and a towing path (7),
the front yoke (1) and the rear yoke (3) are respectively connected to the front yoke shaft (2) and rear yoke shaft (4), and can rotate horizontally around the front yoke shaft (2) and the rear yoke shaft (4) under the control of the control unit, respectively,
the front yoke shaft (2) and the rear yoke shaft (4) are connected to the towing mechanism (5) in tandem,
the drive unit drives the towing mechanism (5) to run in the towing path (7), and the axial directions of both the front yoke shaft (2) and the rear yoke shaft (4) are perpendicular to a surface of the towing mechanism (5),
the vehicle towing device further comprises a track arranged on both sides of the towing path (7), and the towing mechanism (5) is disposed on two parallel rails of said track,
there are two towing mechanisms (5) which are symmetrically disposed on the two parallel rails of the track,
each of said two towing mechanisms (5) is connected to one front yoke shaft (2) and one rear yoke shaft (4), the two front yoke shafts (2) are arranged symmetrically about a central axis of the towing path (7), and the two rear yoke shafts (4) are arranged symmetrically about the central axis of the towing path (7),
each of said two front yoke shafts (2) is connected to one front yoke (1), and each of said two rear yoke shafts (4) is connected to one rear yoke (3), and the two front yokes (1) are arranged symmetrically and the two rear yokes (3) are arranged symmetrically,
**characterized in that** the vehicle towing device further comprises a portal frame (10) with the two ends thereof respectively connected to the two towing mechanisms (5) on both sides of the towing path (7).

2. The vehicle towing device according to claim 1, **characterized in that**
the towing mechanism (5) is a tractor,
there are two front yoke shafts (2) which are distributed on the tractor in a bilaterally symmetrical manner,
there are two rear yoke shafts (4) which are distributed on the tractor in a bilaterally symmetrical manner,
the front yokes (1) are two bilaterally symmetrical yokes mounted on said two front yoke shafts (2), respectively, the rear yokes (3) are two bilaterally symmetrical yokes mounted on said two rear yoke shafts (4), respectively.

3. The vehicle towing device according to claim 1 or 2, **characterized in that**
a bottom of the towing path (7) is lower than the ground (6) nearby, and a lower surface of the front yoke (1) and the rear yoke (3) is slightly higher than the ground (6) nearby,
a width of the towing path (7) is less than a distance between the two front wheels (9) of the towed vehicle.

4. The vehicle towing device according to claim 3, **characterized in that**
it further comprises a track arranged on both sides of the towing path (7), and the towing mechanism (5) is disposed on two parallel rails of said track.

5. The vehicle towing device according to claim 1, **characterized in that**
the two rails of the track are arranged at both inner sides of the towing path (7), respectively.

6. The vehicle towing device according to any one of claims 1-5, **characterized in that**
a slope is formed at a side of the front yoke (1) and the rear yoke (3) close to the front wheels (9) of the vehicle, so that the front yoke (1) and the rear yoke (3), when being held against the front wheels (9) of the vehicle, have the maximum contact surface with the front wheels of the vehicle.

7. The vehicle towing device according to any one of claims 1-6, **characterized in that**
it further comprises a front sensor and a rear sensor respectively disposed on the front yoke (1) and the rear yoke (3), the front sensor and the rear sensor are respectively used for identifying contact of the front yoke (1) and the rear yoke (3) with the front wheels of the vehicle.

8. A vehicle towing method for the vehicle towing device of any one of claims 1-7, **characterized in that** said method comprises the following steps:
keeping the front yoke (1) in an open state so that the front yoke (1) is substantially perpendicular to the direction of the towing path (7), and keeping the rear yoke (3) in a closed state so that the rear yoke (3) is substantially parallel to the direction of the towing path;
driving the vehicle into a preset area by a driver and stopping the vehicle;
making the front yoke (1) and the rear yoke (3) of the vehicle towing device to clamp the front wheels (9) of the vehicle;
lifting the front wheels (9) of the vehicle by the front yoke (1) and the rear yoke so that the front wheels (9) of the vehicle leave the ground;
towing the vehicle through the towing path (7) by the towing mechanism (5) of the vehicle towing device via said front yoke shaft (2), said rear yoke shaft (4), said front yoke (1) and said rear yoke (3);
laying down the front wheels (9) of the vehicle after the towing mechanism (5) has towed the front wheels (9) of the vehicle through the preset area;
respectively rotating the front yoke (1) and the rear yoke (3) horizontally about their respective front yoke shaft (1) and rear yoke shaft (4) until they are parallel to the direction of the towing path (7), then moving the towing mechanism (5) along the towing path (7) in an opposite direction of towing the vehicle to advance to a start point in the preset area so as to tow next vehicle.

9. The vehicle towing method according to claim 8, **characterized in that**
the step of driving the vehicle into a preset area by a driver and stopping the vehicle is specifically carried out in the following manner: providing a shallow V-pit or a mechanism that can move to form a V-pit at a designated location where the vehicle needs to stop in the towing path, and driving the vehicle into the V-pit by the driver to finish stopping the vehicle at the designated location.

10. The vehicle towing method according to claim 8, **characterized in that**
the step of driving the vehicle into the preset area by a driver and stopping the vehicle is specifically carried out in the following manner: setting a block area, moving the towing mechanism to the vehicle from a position far away from said vehicle, and finding the wheels by means of a sensor on the yoke to finish stopping the vehicle at a designated location.

11. A vehicle towing method for the vehicle towing device of any one of claims 1-7, **characterized in that** said method comprises the following steps:
keeping the rear yoke (3) in a closed state so that the rear yoke (3) is substantially parallel to the direction of the towing path (7);
driving the vehicle into a preset area;
keeping the front yoke (1) in an open state so that the front yoke (1) is substantially perpendicular to the direction of the towing path (7);
stopping the vehicle after the two front wheels (9) of the vehicle have been put against the front yoke (1) of the vehicle towing device;
making the rear yoke (3) of the vehicle towing device to rotate horizontally around the rear yoke shaft (4) so that it is held against the front wheels (9) of the vehicle;
lifting the front wheels (9) of the vehicle by the front yoke (1) and the rear yoke (3) so that the front wheels (9) of the vehicle leave the ground;
towing the vehicle through the towing path (7) by the towing mechanism (5) of the vehicle towing device via said front yoke shaft (2), said rear yoke shaft (4), said front yoke (1) and said rear yoke (3);
laying down the front wheels (9) of the vehicle after the towing mechanism (5) has towed the front wheels (9) of the vehicle through the preset area;
respectively rotating the front yoke (1) and the rear yoke (3) horizontally about their respective front yoke shaft (2) and rear yoke shaft (4) until they are parallel to the direction of the towing path (7), then moving the towing mechanism (5) along the towing path (7) in an opposite direction of towing the vehicle to advance to a start point in the preset area so as to tow next vehicle.

## Patentansprüche

1. Vorrichtung zum Ziehen eines Fahrzeugs, die einen vorderen Bügel (1), einen hinteren Bügel (3), eine vordere Bügelwelle (2), eine hintere Bügelwelle (4), einen Zugmechanismus (5), eine Steuereinheit, eine Antriebseinheit und einen Zugweg (7) umfasst,
wobei der vordere Bügel (1) und der hintere Bügel (3) jeweils mit der vorderen Bügelwelle (2) und der hinteren Bügelwelle (4) verbunden sind und sich unter der Steuerung der Steuereinheit jeweils um die vordere Bügelwelle (2) und die hintere Bügelwelle (4) horizontal drehen können,
wobei die vordere Bügelwelle (2) und die hintere Bügelwelle (4) hintereinander mit dem Zugmechanismus (5) verbunden sind,
wobei die Antriebseinheit den Zugmechanismus (5) so antreibt, dass er sich auf dem Zugweg (7) bewegt, und wobei die axialen Richtungen der vorderen Bügelwelle (2) und der hinteren Bügelwelle (4) senkrecht zu einer Oberfläche des Zugmechanismus (5) verlaufen,
wobei die Vorrichtung zum Ziehen des Fahrzeugs ferner eine Bahn umfasst, die an beiden Seiten des Zugwegs (7) angeordnet ist, und wobei der Zugmechanismus (5) auf zwei parallelen Schienen der Bahn angeordnet ist,
wobei zwei Zugmechanismen (5) vorgesehen sind, die auf den zwei parallelen Schienen der Bahn symmetrisch angeordnet sind,
wobei jeder der zwei Zugmechanismen (5) mit einer vorderen Bügelwelle (2) und einer hinteren Bügelwelle (4) verbunden ist, wobei die zwei vorderen Bügelwellen (2) symmetrisch zu der Mittelachse des Zugwegs (7) angeordnet sind und wobei die zwei hinteren Bügelwellen (4) symmetrisch zu der Mittelachse des Zugwegs (7) angeordnet sind,
wobei jede der zwei vorderen Bügelwellen (2) mit einem vorderen Bügel (1) verbunden ist und jede der zwei hinteren Bügelwellen (4) mit einem hinteren Bügel (3) verbunden ist und wobei die zwei vorderen Bügel (1) symmetrisch angeordnet sind und die zwei hinteren Bügel (3) symmetrisch angeordnet sind,
**dadurch gekennzeichnet, dass** die Vorrichtung zum Ziehen eines Fahrzeugs ferner einen Portalrahmen (10) umfasst, wovon beide Enden jeweils mit den zwei Zugmechanismen (5) auf beiden Seiten des Zugwegs (7) verbunden sind.

2. Vorrichtung zum Ziehen eines Fahrzeugs nach Anspruch 1, **dadurch gekennzeichnet, dass**
der Zugmechanismus (5) eine Zugmaschine ist,
zwei vordere Bügelwellen (2) vorgesehen sind, die an der Zugmaschine beidseitig symmetrisch verteilt sind,
zwei hintere Bügelwellen (4) vorgesehen sind, die an der Zugmaschine beidseitig symmetrisch verteilt sind,
die vorderen Bügel (1) zwei beidseitig symmetrische Bügel sind, die jeweils an zwei vorderen Bügelwellen (2) angebracht sind, wobei die hinteren Bügel (3) zwei beidseitig symmetrische Bügel sind, die jeweils an zwei hinteren Bügelwellen (4) angebracht sind.

3. Vorrichtung zum Ziehen eines Fahrzeugs nach Anspruch 1 oder 2, **dadurch gekennzeichnet, dass**
eine Basis des Zugwegs (7) tiefer als der daneben befindliche Boden (6) ist und eine untere Oberfläche des vorderen Bügels (1) und des hinteren Bügels (3) etwas höher als der daneben befindliche Boden (6) liegen,
wobei eine Breite des Zugwegs (7) kleiner als ein Abstand zwischen den zwei Vorderrädern (9) des gezogenen Fahrzeugs ist.

4. Vorrichtung zum Ziehen eines Fahrzeugs nach Anspruch 3, **dadurch gekennzeichnet, dass**
sie ferner eine Bahn umfasst, die auf beiden Seiten des Zugwegs (7) angeordnet ist, und wobei der Zugmechanismus (5) auf zwei parallelen Schienen der Bahn angeordnet ist.

5. Vorrichtung zum Ziehen eines Fahrzeugs nach Anspruch 1, **dadurch gekennzeichnet, dass**
die zwei Schienen der Bahn jeweils an beiden Innenseiten des Zugwegs (7) angeordnet sind.

6. Vorrichtung zum Ziehen eines Fahrzeugs nach einem der Ansprüche 1-5, **dadurch gekennzeichnet, dass**
eine Schräge an einer Seite des vorderen Bügels (1) und des hinteren Bügels (3) direkt bei den Vorderrädern (9) des Fahrzeugs ausgebildet ist, so dass der vordere Bügel (1) und der hintere Bügel (3) dann, wenn sie gegen die Vorderräder (9) des Fahrzeugs gedrückt werden, die maximale Kontaktfläche mit den Vorderrädern des Fahrzeugs haben.

7. Vorrichtung zum Ziehen eines Fahrzeugs noch einen der Ansprüche 1-6, **dadurch gekennzeichnet, dass**
sie ferner einen vorderen Sensor und einen hinteren Sensor, die jeweils an dem vorderen Bügel (1) und dem hinteren Bügel (3) angeordnet sind, umfasst, wobei der vordere Sensor und der hintere Sensor jeweils zum Identifizieren eines Kontakts des vorderen Bügels (1) und des hinteren Bügels (3) mit den Vorderrädern des Fahrzeugs verwendet werden.

8. Verfahren zum Ziehen eines Fahrzeugs für die Vorrichtung zum Ziehen eines Fahrzeugs nach einem der Ansprüche 1-7, **dadurch gekennzeichnet, dass** das Verfahren die folgenden Schritte umfasst:
Halten des vorderen Bügels (1) in einem offenen Zustand, so dass der vordere Bügel (1) im Wesentlichen senkrecht zu der Richtung des Zugwegs (7) verläuft, und Halten des hinteren Bügels (3) in einem geschlossenen Zustand, so dass der hintere Bügel (3) im Wesentlichen parallel zu der Richtung des Zugwegs verläuft;
Fahren des Fahrzeugs in einen vorgegebenen Bereich durch einen Fahrer und Stoppen des Fahrzeugs;
Einklemmen der Vorderräder (9) des Fahrzeugs in den vorderen Bügel (1) und den hinteren Bügel (3) der Vorrichtung zum Ziehen des Fahrzeugs;
Anheben der Vorderräder (9) des Fahrzeugs durch den vorderen Bügel (1) und den hinteren Bügel, so dass die Vorderräder (9) des Fahrzeugs vom Boden abheben;
Ziehen des Fahrzeugs durch die Zugweg (7) mittels des Zugmechanismus (5) der Vorrichtung zum Ziehen des Fahrzeugs mittels der vorderen Bügelwelle (2), der hinteren Bügelwelle (4), des vorderen Bügels (1) und des hinteren Bügels (3);
Ablegen der Vorderräder (9) des Fahrzeugs, nachdem der Zugmechanismus (5) die Vorderräder (9) des Fahrzeugs durch den vorgegebenen Bereich gezogen hat;
jeweils Drehen des vorderen Bügels (1) und des hinteren Bügels (3) horizontal um die jeweilige vordere Bügelwelle (1) und die hintere Bügelwelle (4), bis sie parallel zu der Richtung des Zugwegs (7) verlaufen, daraufhin Bewegen des Zugmechanismus (5) längs des Zugwegs (7) in einer Richtung, die zu der Zugrichtung des Fahrzeugs entgegengesetzt ist, so dass er sich zu einem Startpunkt in dem vorgegebenen Bereich bewegt, um das nächste Fahrzeug zu ziehen.

9. Verfahren zum Ziehen eines Fahrzeugs nach Anspruch 8, **dadurch gekennzeichnet, dass**
der Schritt des Fahrens des Fahrzeugs in einen vorgegebenen Bereich durch einen Fahrer und des Stoppens des Fahrzeugs insbesondere wie folgt ausgeführt wird: Bereitstellen einer schmalen V-Grube oder eines Mechanismus, der sich bewegen kann, um eine V-Grube bei einer zugewiesenen Position zu bilden, bei der das Fahrzeug auf dem Zugweg stoppen muss, und Fahren des Fahrzeugs in die V-Grube durch den Fahrer, um das Stoppen des Fahrzeugs bei der zugewiesenen Position zu beenden.

10. Verfahren zum Ziehen eines Fahrzeugs nach Anspruch 8, **dadurch gekennzeichnet, dass**
der Schritt des Fahrens des Fahrzeugs in den vorgegebenen Bereich durch einen Fahrer und des Stoppens des Fahrzeugs insbesondere wie folgt ausgeführt wird: Festlegen eines Sperrbereichs, Bewegen des Zugmechanismus von einer Position, die von dem Fahrzeug weit entfernt ist, zu dem Fahrzeug, und Finden der Räder mittels eines Sensors an dem Bügel, um das Stoppen des Fahrzeugs bei einer zugewiesenen Position zu beenden.

11. Verfahren zum Ziehen eines Fahrzeugs für die Vorrichtung zum Ziehen eines Fahrzeugs nach einen der Ansprüche 1-7, **dadurch gekennzeichnet, dass** das Verfahren die folgenden Schritte umfasst:
Halten des hinteren Bügels (3) in einem geschlossenen Zustand, so dass der hintere Bügel (3) im Wesentlichen parallel zu der Richtung des Zugwegs (7) verläuft;
Fahren des Fahrzeugs in einen vorgegebenen Bereich;
Halten des vorderen Bügels (1) in einem offenen Zustand, so dass der vordere Bügel (1) im Wesentlichen senkrecht zu der Richtung des Zugwegs (7) verläuft;
Stoppen des Fahrzeugs, nachdem die zwei Vorderräder (9) des Fahrzeugs an dem vorderen Bügel (1) der Vorrichtung zum Ziehen des Fahrzeugs anliegen;
horizontales Drehen des hinteren Bügels (3) der Vorrichtung zum Ziehen des Fahrzeugs um die hintere Bügelwelle (4), so dass er gegen die Vorderräder (9) des Fahrzeugs gedrückt wird;
Anheben der Vorderräder (9) des Fahrzeugs durch den vorderen Bügel (1) und den hinteren Bügel (3), so dass die Vorderräder (9) des Fahrzeugs vom Boden abheben;
Ziehen des Fahrzeugs durch die Zugweg (7) mittels des Zugmechanismus (5) der Vorrichtung zum Ziehen eines Fahrzeugs über die vordere Bügelwelle (2), die hintere Bügelwelle (4), den vorderen Bügel (1) und den hinteren Bügel (3);
Absetzen der Vorderräder (9) des Fahrzeugs, nachdem der Zugmechanismus (5) die Vorderräder (9) des Fahrzeugs durch den vorgegebenen Bereich gezogen hat;
jeweils Drehen des vorderen Bügels (1) und des hinteren Bügels (3) horizontal um die jeweilige vordere Bügelwelle (2) und die hintere Bügelwelle (4), bis sie parallel zu der Richtung des Zugwegs (7) verlaufen, daraufhin Bewegen des Zugmechanismus (5) entlang des Zugwegs (7) in einer Richtung, die entgegengesetzt zu der Zugrichtung des Fahrzeugs ist, so dass er sich zu einem Startpunkt in dem vorgegebenen Bereich bewegt, um das nächste Fahrzeug zu ziehen.

## Revendications

1. Dispositif de remorquage de véhicule comprenant une fourche avant (1), une fourche arrière (3), un arbre (2) à fourche avant, un arbre (4) à fourche arrière, un mécanisme de remorquage (5), une unité de commande, une unité d'entraînement et un chemin de remorquage (7),
la fourche avant (1) et la fourche arrière (3) sont reliées respectivement à l'arbre (2) à fourche avant et l'arbre (4) à fourche arrière, et peuvent tourner horizontalement autour de l'arbre (2) à fourche avant et de l'arbre (4) à fourche arrière sous la commande de l'unité de commande, respectivement,
l'arbre (2) à fourche avant et l'arbre (4) à fourche arrière sont reliés au mécanisme de remorquage (5) en tandem,
l'unité d'entraînement entraîne le mécanisme de remorquage (5) pour qu'il fonctionne dans le chemin de remorquage (7), et les directions axiales à la fois de l'arbre (2) à fourche avant et de l'arbre (4) à fourche arrière sont perpendiculaires à une surface du mécanisme de remorquage (5),
le dispositif de remorquage de véhicule comprend en outre une voie agencée sur les deux côtés du chemin de remorquage (7), et le mécanisme de remorquage (5) est disposé sur deux rails parallèles de ladite voie,
il y a deux mécanismes de remorquage (5) qui sont disposés symétriquement sur les deux rails parallèles de la voie,
chacun desdits deux mécanismes de remorquage (5) est relié à un arbre (2) à fourche avant et à un arbre (4) à fourche arrière, les deux arbres (2) à fourche avant sont agencés symétriquement autour d'un axe central du chemin de remorquage (7), et les deux arbres (4) à fourche arrière sont agencés symétriquement autour de l'axe central du chemin de remorquage (7),
chacun desdits deux arbres (2) à fourche avant est relié à une fourche avant (1), et chacun desdits deux arbres (4) à fourche arrière est relié à une fourche arrière (3), et les deux fourches avant (1) sont agencées symétriquement et les deux fourches arrière (3) sont agencées symétriquement,
**caractérisé en ce que** le dispositif de remorquage de véhicule comprend en outre un portique (10) avec les deux extrémités de celui-ci reliées respectivement aux deux mécanismes de remorquage (5) sur les deux côtés du chemin de remorquage (7).

2. Dispositif de remorquage de véhicule selon la revendication 1, **caractérisé en ce que**
le mécanisme de remorquage (5) est un tracteur,
il y a deux arbres (2) à fourche avant qui sont distribués sur le tracteur d'une manière bilatéralement symétrique,
il y a deux arbres (4) à fourche arrière qui sont distribués sur le tracteur d'une manière bilatéralement symétrique,
les fourches avant (1) sont deux fourches bilatéralement symétriques montées sur lesdits deux arbres (2) à fourche avant, respectivement, les fourches arrière (3) sont deux fourches bilatéralement symétriques montées sur lesdits deux arbres (4) à fourche arrière, respectivement.

3. Dispositif de remorquage de véhicule selon la revendication 1 ou 2, **caractérisé en ce que** un fond du chemin de remorquage (7) est plus bas que le sol (6) à proximité, et une surface plus basse de la fourche avant (1) et de la fourche arrière (3) est légèrement plus haute que le sol (6) à proximité,
une largeur du chemin de remorquage (7) est inférieure à une distance entre les deux roues avant (9) du véhicule remorqué.

4. Dispositif de remorquage de véhicule selon la revendication 3, **caractérisé en ce que**
il comprend en outre une voie agencée sur les deux côtés du chemin de remorquage (7), et le mécanisme de remorquage (5) est disposé sur deux rails parallèles de ladite voie.

5. Dispositif de remorquage de véhicule selon la revendication 1, **caractérisé en ce que**
les deux rails de la voie sont agencés au niveau des deux côtés intérieurs du chemin de remorquage (7), respectivement.

6. Dispositif de remorquage de véhicule selon l'une quelconque des revendications 1 à 5, **caractérisé en ce que**
une pente est formée au niveau d'un côté de la fourche avant (1) et de la fourche arrière (3) près des roues avant (9) du véhicule, de façon à ce que la fourche avant (1) et la fourche arrière (3), lorsqu'elles sont retenues contre les roues avant (9) du véhicule, aient la surface de contact maximale avec les roues avant du véhicule.

7. Dispositif de remorquage de véhicule selon l'une quelconque des revendications 1 à 6, **caractérisé en ce que**
il comprend en outre un capteur avant et un capteur arrière disposés respectivement sur la fourche avant (1) et la fourche arrière (3), le capteur avant et le capteur arrière sont utilisés respectivement pour identifier un contact de la fourche avant (1) et de la fourche arrière (3) avec les roues avant du véhicule.

8. Procédé de remorquage de véhicule pour le dispositif de remorquage de véhicule selon l'une quelconque des revendications 1 à 7, **caractérisé en ce que** ledit procédé comprend les étapes suivantes :
le maintien de la fourche avant (1) dans un état ouvert de façon à ce que la fourche avant (1) soit sensiblement perpendiculaire à la direction du chemin de remorquage (7), et le maintien de la fourche arrière (3) dans un état fermé de façon à ce que la fourche arrière (3) soit sensiblement parallèle à la direction du chemin de remorquage ;
la conduite du véhicule dans une zone prédéfinie par un conducteur et l'arrêt du véhicule ;
le fait d'amener la fourche avant (1) et la fourche arrière (3) du dispositif de remorquage de véhicule à serrer les roues avant (9) du véhicule ;
le soulèvement des roues avant (9) du véhicule par la fourche avant (1) et la fourche arrière de façon à ce que les roues avant (9) du véhicule quittent le sol ;
le remorquage du véhicule à travers le chemin de remorquage (7) par le mécanisme de remorquage (5) du dispositif de remorquage de véhicule via ledit arbre (2) à fourche avant, ledit arbre (4) à fourche arrière, ladite fourche avant (1) et ladite fourche arrière (3) ;
la dépose des roues avant (9) du véhicule après que le mécanisme de remorquage (5) a remorqué les roues avant (9) du véhicule à travers la zone prédéfinie ;
la rotation de manière respective de la fourche avant (1) et de la fourche arrière (3) horizontalement autour de leur arbre (2) à fourche avant et leur arbre (4) à fourche arrière respectifs jusqu'à ce qu'elles soient parallèles à la direction du chemin de remorquage (7),
puis le déplacement du mécanisme de remorquage (5) le long du chemin de remorquage (7) dans une direction opposée de remorquage du véhicule pour avancer jusqu'à un point de départ dans la zone prédéfinie de façon à remorquer un prochain véhicule.

9. Procédé de remorquage de véhicule selon la revendication 8, **caractérisé en ce que**
l'étape consistant à conduire le véhicule dans une zone prédéfinie par un conducteur et arrêter le véhicule est spécifiquement mise en œuvre de la manière suivante : la fourniture d'une fosse en V peu profonde ou d'un mécanisme qui peut se déplacer pour former une fosse en V à un emplacement désigné où le véhicule doit s'arrêter dans le chemin de remorquage, et la conduite du véhicule dans la fosse en V par le conducteur pour finir d'arrêter le véhicule à l'emplacement désigné.

10. Procédé de remorquage de véhicule selon la revendication 8, **caractérisé en ce que**
l'étape consistant à conduire le véhicule dans la zone prédéfinie par un conducteur et arrêter le véhicule est spécifiquement mise en œuvre de la manière suivante : la définition d'une zone de blocage, le déplacement du mécanisme de remorquage jusqu'au véhicule à partir d'une position éloignée dudit véhicule, et le fait de trouver les roues au moyen d'un capteur sur la fourche pour finir d'arrêter le véhicule à un emplacement désigné.

11. Procédé de remorquage de véhicule pour le dispositif de remorquage de véhicule selon l'une quelconque des revendications 1 à 7, **caractérisé en ce que** ledit procédé comprend les étapes suivantes :
le maintien de la fourche arrière (3) dans un état fermé de façon à ce que la fourche arrière (3) soit sensiblement parallèle à la direction du chemin de remorquage (7) ;
la conduite du véhicule dans une zone prédéfinie ;
le maintien de la fourche avant (1) dans un état ouvert de façon à ce que la fourche avant (1) soit sensiblement perpendiculaire à la direction du chemin de remorquage (7) ;
l'arrêt du véhicule après que les deux roues avant (9) du véhicule ont été mises contre la fourche avant (1) du dispositif de remorquage de véhicule ;
le fait d'amener la fourche arrière (3) du dispositif de remorquage de véhicule à tourner horizontalement autour de l'arbre (4) à fourche arrière de façon à ce qu'elle soit retenue contre les roues avant (9) du véhicule ;
le soulèvement des roues avant (9) du véhicule par la fourche avant (1) et la fourche arrière (3) de façon à ce que les roues avant (9) du véhicule quittent le sol ;
le remorquage du véhicule à travers le chemin de remorquage (7) par le mécanisme de remorquage (5) du dispositif de remorquage de véhicule via ledit arbre (2) à fourche avant, ledit arbre (4) à fourche arrière, ladite fourche avant (1) et ladite fourche arrière (3) ;
la dépose des roues avant (9) du véhicule après que le mécanisme de remorquage (5) a remorqué les roues avant (9) du véhicule à travers la zone prédéfinie ;
la rotation de manière respective de la fourche avant (1) et de la fourche arrière (3) horizontalement autour de leur arbre (2) à fourche avant et leur arbre (4) à fourche arrière respectifs jusqu'à ce qu'elles soient parallèles à la direction du chemin de remorquage (7),
puis le déplacement du mécanisme de remorquage (5) le long du chemin de remorquage (7) dans une direction opposée de remorquage du véhicule pour avancer jusqu'à un point de départ dans la zone prédéfinie de façon à remorquer un prochain véhicule.
